**Europäisches Patentamt**

**European Patent Office**

**Office européen des brevets**

(19)

(11) Veröffentlichungsnummer: **0 211 335**
**B1**

(12)
# EUROPÄISCHE PATENTSCHRIFT

(45) Veröffentlichungstag der Patentschrift:
**11.05.88**

(21) Anmeldenummer: **86110159.0**

(22) Anmeldetag: **23.07.86**

(51) Int. Cl.⁴: **F 02 C 3/28,** F 01 K 23/08,
C 10 J 3/00, B 01 D 53/04

(54) **Kombiniertes Gas- und Dampfturbinenkraftwerk.**

(30) Priorität: **05.08.85 DE 3528073**

(43) Veröffentlichungstag der Anmeldung:
**25.02.87 Patentblatt 87/9**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**EP - A - 0 127 092**
**DE - A - 2 733 029**
**DE - A - 3 123 748**
**DE - A - 3 319 711**
**GB - A - 2 029 855**

(73) Patentinhaber: **Siemens Aktiengesellschaft Berlin und München, Wittelsbacherplatz 2, D-8000 München 2 (DE)**

(72) Erfinder: **Schiffers, Ulrich, Dr., Moritzbergstrasse 1, D-8501 Eckental (DE)**

## Beschreibung

Die Erfindung bezieht sich auf ein kombiniertes Gas- und Dampfturbinenkraftwerk mit einem dem Gasturbinenteil vorgeschalteten Kohlevergaser, mit einer dem Kohlevergaser nachgeschalteten Wärmetauscheranlage mit einem Rohgas-Reingas-Wärmetauscher, einer der Wärmetauscheranlage nachgeschalteten Gasreinigungsanlage, mit einer zur Brennkammer der Gasturbine führenden Reingasleitung, mit einer dem Kohlevergaser vorgeschalteten Luftzerlegungsanlage, mit einer den Kohlevergaser speisenden Sauerstoffleitung und einer zur Brennkammer der Gasturbine führenden Stickstoffleitung, einem in die Stickstoffleitung eingeschalteten Stickstoffverdichter und mindestens einem der Luftzerlegungsanlage und der Brennkammer der Gasturbine vorgeschalteten Luftverdichter.

Ein solches kombiniertes Gas- und Dampfturbinenkraftwerk ist durch die DE-A-33 19 711 bekannt. Bei diesem kombinierten Gas- und Dampfturbinenkraftwerk wird das den Kohlevergaser verlassende heisse Rohgas in einer einen Hochdruckdampferzeuger, einen Rohgas-Reingas-Wärmetauscher und einen Niederdruckdampferzeuger umfassenden Wärmetauscheranlage abgekühlt, bevor es in eine Gasreinigungsanlage eingeleitet wird. Die dabei gewonnene Wärme wird im Hochdruckdampferzeuger zur Erzeugung von Hochdruckdampf, im Rohgas-Reingas-Wärmetauscher zur Wiederaufheizung des von der Gasreinigungsanlage zur Brennkammer der Gasturbine strömenden Reingases und im Niederdruckdampferzeuger zur Erzeugung von Niederdruckdampf verwendet. Der so erzeugte Hoch- und Niederdruckdampf wird dem Dampfturbinenkraftwerksteil zugeleitet. Darüber hinaus wird bei diesem bekannten Kraftwerk weiterer Hochdruckdampf in dem vom Abgasstrom der Gasturbine durchströmten Abhitzedampferzeuger erzeugt. Es ist ein besonderer Vorzug eines solchen Gas- und Dampfturbinenkraftwerks, dass seine Leistung in weiten Grenzen variiert werden kann. Selbst bei vollständigem Abschalten der Gasturbine und dem Aufhören der Dampferzeugung in dem der Gasturbine nachgeschalteten Abhitzedampferzeuger kann die Dampfturbine mit Hilfe des in der dem Kohlevergaser nachgeschalteten Wärmetauscheranlage erzeugten Dampfes — wenn auch mit verringerter Leistung — weiter betrieben werden, so dass selbst in diesem extremen Fall noch der Eigenbedarf an elektrischer Leistung über den von der Dampfturbine angetriebenen Generator gedeckt werden kann.

Der Erfindung liegt die Aufgabe zugrunde, die bei einem solchen kombinierten Gas- und Dampfturbinenkraftwerk an verschiedenen Stellen frei werdende Wärme zwecks Erhöhung des Gesamtwirkungsgrades noch rationeller auszunutzen.

Diese Aufgabe wird durch die Merkmale des Anspruchs 1 gelöst. Vorteilhafte Weiterbildungen sind in den Ansprüchen 2 bis 12 beschrieben.

Die Aufspaltung der den Luftverdichter mit dem Eingang der Luftzerlegungsanlage verbindenden Luftleitung in zwei parallele Zweige ermöglicht es, die überschüssige Wärme der verdichteten und zur Luftzerlegungsanlage strömenden Luft in dem Temperaturniveau, in dem sie anfällt, einerseits zur Regenerierung der Molsiebe der Luftzerlegungsanlage und andererseits zur weiteren Aufheizung des aus der Luftzerlegungsanlage anströmenden, durch die Verdichtung im Stickstoffverdichter bereits vorgeheizten Stickstoffs auf das Temperaturniveau des den Rohgas-Reingas-Wärmetauscher verlassenden Reingases aufzuheizen. Hierdurch kann die Brenngastemperatur vor Eintritt in die Brennkammer der Gasturbine weiter erhöht werden, ohne dass dazu das Reingas in der Rohgas-Reingas-Wärmetauscheranlage allzu stark aufgeheizt werden muss.

Bei dieser Aufheizung des der Brennkammer der Gasturbine zuströmenden Brenngases ist es besonders zweckmässig, die Stickstoffleitung in Weiterbildung der Erfindung hinter dem Stickstoff-Luft-Wärmetauscher in die Reingasleitung hinter dem Rohgas-Reingas-Wärmetauscher münden zu lassen. Dies hat den Vorteil, dass die Aufheizung des Stickstoffes hier auf einem niedrigeren Temperaturniveau stattfinden kann, als wenn dieser zuvor schon dem heissen Rohgas beigemischt worden wäre.

In zweckmässiger Weiterbildung der Erfindung kann in den den Stickstoff-Luftwärmetauscher enthaltenen Zweig der Luftleitung ein weiterer Wärmetauscher zur Erzeugung von Prozesswärme eingeschaltet sein. Dies erschliesst die Möglichkeit, die nach dem Passieren des Stickstoff-Luft-Wärmetauschers in der Verdichterluft noch vorhandene Wärme im Kraftwerk anzunutzen und damit den Netto-Wirkungsgrad des Kraftwerkes weiter zu verbessern.

Weitere Einzelheiten der Erfindung werden anhand eines in der Figur dargestellten Ausführungsbeispiels erläutert. Es zeigt:

Die Figur eine schematische Darstellung der einzelnen Komponenten des erfindungsgemässen Gas- und Dampfturbinenkraftwerks in ihrer gegenseitigen Verknüpfung.

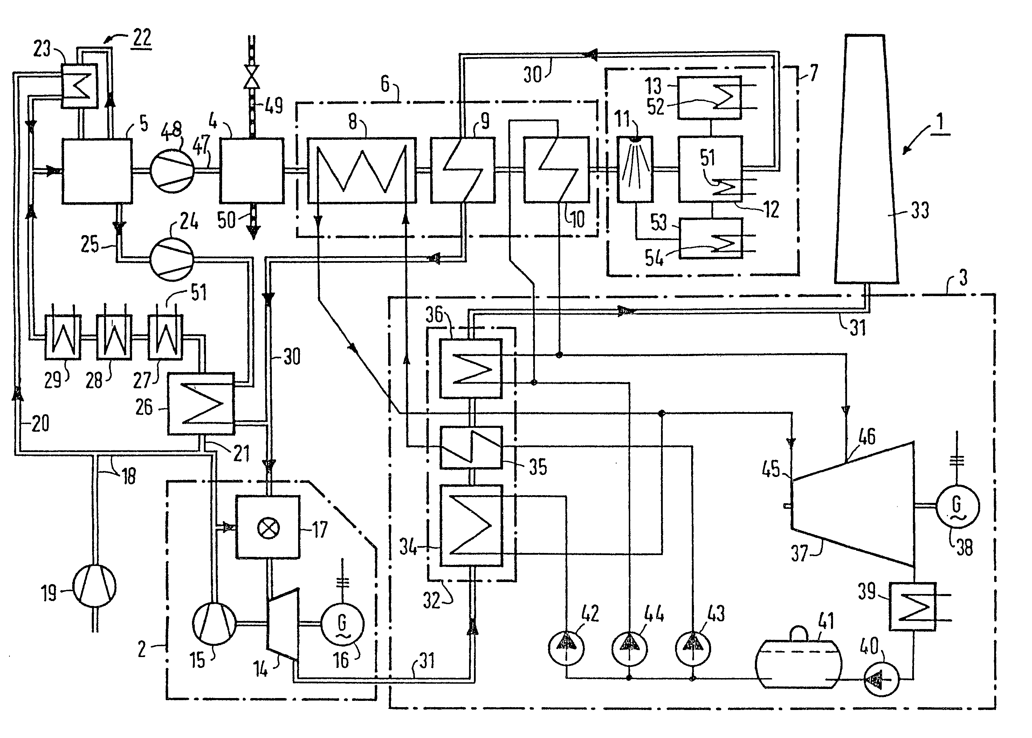

Das kombinierte Gas- und Dampfturbinenkraftwerk 1 besteht, wie die Figur 1 zeigt, im wesentlichen aus einem Gasturbinenkraftwerksteil 2 und aus einem Dampfturbinenkraftwerksteil 3, einem dem Gasturbinenkraftwerksteil vorgeschalteten Kohlevergaser 4 mit einer dem Kohlevergaser vorgeschalteten Luftzerlegungsanlage 5, einer dem Kohlevergaser rohgasseitig nachgeschalteten Wärmetauscheranlage 6 und einer der Wärmetauscheranlage 6 rohgasseitig nachgeschalteten Gasreinigungsanlage 7. Die Wärmetauscheranlage 6 umfasst einen Hochdruckdampferzeuger 8, einen Rohgas-Reingas-Wärmetauscher 9 und einen Niederdruckdampferzeuger 10. Die rohgasseitig der Wärmetauscheranlage 6 nachgeschaltete Gasreinigungsanlage 7 umfasst im Ausführungsbeispiel einen Rohgaswäscher 11, eine Schwefelwasserstoffabsorptionsanlage 12, eine Schwefelgewinnungsanlage 13 und eine Abwasserbehandlungsanlage 54 mit einem Verdampfer 53 zur Abwassereindampfung. Der Gasturbinenkraftwerksteil beinhaltet eine Gasturbine 14 sowie je einen von der Gasturbine angetriebenen Luftverdichter 15 und Generator 16.

An den Luftverdichter 15 ist eine sowohl zur Brennkammer 17 der Gasturbine 14 als auch zur Luftzerlegungsanlage 5 führende Luftleitung 18 angeschlossen. An dieser Luftleitung ist parallel zu dem von der Gasturbine 14 angetriebenen Luftverdichter 15 ein weiterer bedarfsweise zuschaltbarer, separat antreibbarer Luftverdichter 19 angeschlossen. Die Luftleitung 18 ist zwischen den beiden Luftverdichtern 15, 19 und der Luftzerlegungsanlage 5 in zwei Zweige 20, 21 aufgespalten. Von diesen führt der eine Zweig 20 über einen in den Molsiebregenerationskreislauf 22 der Luftzerlegungsanlage 5 geschalteten Wärmetauscher 23 zur Luftzerlegungsanlage. Der andere Zweig 21 führt über einen hinter den Stickstoffverdichter 24 in der Stickstoffleitung 25 eingeschalteten Stickstoff-Luft-Wärmetauscher 26, einen weiteren Wärmetauscher 27 zur Erzeugung von Prozesswärme, einen Wärmetauscher 28 zur Erzeugung von Prozesswärme und/oder zur Fernwärmeauskopplung sowie einen Endkühler 29 zum Eingang der Luftzerlegungsanlage 5. Die die Gasreinigungsanlage 7 verlassende Reingasleitung 30 führt über den Rohgas-Reingas-Wärmetauscher 9 der Wärmetauscheranlage 6 unmittelbar in die Brennkammer 17 der Gasturbine 14. In diese Reingasleitung 30 mündet vor deren Eintritt in die Brennkammer die aus dem Stickstoff-Luft-Wärmetauscher 26 austretende Stickstoffleitung 25.

Die Abgasleitung 31 der Gasturbine führt durch eine Abhitzedampferzeugeranlage 32 und mündet nach dem Passieren derselben in einen Kamin 33. Die Abhitzedampferzeugeranlage umfasst in Strömungsrichtung des Abgases hintereinander angeordnet einen Hochdruckdampferzeuger 34, eine Speisewasserheizfläche 35 und einen Niederdruckdampferzeuger 36. Die Dampfturbine 37 des Dampfturbinenkraftwerksteils 3 treibt einen Generator 38 an und ist abdampfseitig an einen Kondensator 39 angeschlossen. Der Kondensator ist seinerseits über eine Kondensatpumpe 40 an einen Speisewasserbehälter 41 angeschlossen. Über an den Speisewasserbehälter angeschlossene Speisewasserpumpen 42, 43, 44 werden die verschiedenen Speisewasserheizflächen und Dampferzeugerheizflächen der Abhitzedampferzeugeranlage 32 bzw. der dem Kohlevergaser 4 nachgeschalteten Wärmetauscheranlage 6 versorgt. Die Überhitzerheizflächen in der dem Kohlevergaser 4 nachgeschalteten Wärmetauscheranlage 6 und der in der Abhitzedampferzeugeranlage befindlichen Dampferzeuger sind ausgangsseitig entsprechend ihrem Druckniveau an den entsprechenden Eintrittsstutzen 45, 46 der Dampfturbine 37 angeschlossen.

Beim Betrieb dieses kombinierten Gas- und Dampfturbinenkraftwerks 1 wird durch den auf der Welle der Gasturbine 14 sitzenden Luftverdichter 15 Luft in die Brennkammer 17 und in die Luftleitung 18 gefördert. Diese Luft teilt sich nun in den beiden Zweigen 20, 21 der Luftleitung auf und durchströmt in dem einen Zweig den im Molsiebregenerationskreislauf 22 der Luftzerlegungsanlage 5 geschalteten Wärmetauscher 23 und in dem anderen Zweig 21 nacheinander den Stickstoff-Luft-Wärmetauscher 26, einen Wärmetauscher 27 zur Erzeugung von Prozesswärme, einen weiteren Wärmetauscher 28 zur Fernwärmeauskopplung und einen Endkühler 29, bevor sich dieser Zweig 21 der Luftleitung 18 mit dem anderen Zweig 20 vereinigt und in die Luftzerlegungsanlage 5 einströmt. In der Luftzerlegungsanlage wird die Luft unter Ausnutzung der unterschiedlichen Siedepunkte des Stickstoffs und Sauerstoffs zerlegt. Dabei werden Kohlendioxyd und Wasser vor der Abkühlung der Luft auf tiefe Temperaturen an Molsieben — im allgemeinen Zeolyte oder Aluminiosilikate — adsorbiert und somit aus der Luft abgetrennt. Diese Molsiebe werden zyklisch umgeschaltet und das beladene Molsieb in den Molsiebregenerationskreislauf 22 geschaltet, um die adsorbierten Stoffe durch Aufheizen auszutreiben. Als Regeneriergas wird ein Teilstrom des in der Luftzerlegungsanlage abgetrennten Stickstoffs verwendet. Der in der Luftzerlegungsanlage gewonnene Sauerstoff wird über den in der Sauerstoffleitung 47 eingesetzten Sauerstoffverdichter 48 in den mit Überdruck betriebenen Kohlevergaser geleitet. Diesem Kohlevergaser wird in hier nicht weiter dargestellter Weise über die Kohleeintragsleitung 49 feingemahlene Kohle zugeführt. Die gebildete Asche wird über die Ascheaustragsleitung 50 abgeführt. Das im Kohlevergaser 4 erzeugte Rohgas gibt seine Wärme in der dem Kohlevergaser gasseitig nachgeschalteten Wärmetauscheranlage 6 in die dort eingebauten Hochdruck- und Niederdruckdampferzeuger an das Speisewasser bzw. den Dampf für die Dampfturbine 37 und im Rohgas-Reingas-Wärmetauscher 9 an das der Gasreinigungsanlage 7 entströmende Reingas ab, bevor es in die Gasreinigungsanlage 7 gelangt. In deren Rohgaswäscher 11 werden zunächst Staub, Halogene ausgewaschen und in der nachgeschalteten Schwefelabsorptionsanlage 12 die Schwefelverbindungen sowie weitere Restgase abgetrennt. Die Schwefelverbindungen werden in der angeschlossenen Schwefelgewinnungsanlage 13 in elementaren Schwefel umgewandelt. Die in der Rohgaswäsche 11 und der Schwefelabsorptionsanlage anfallenden Abwässer werden in der Abwasserbehandlung aufgearbeitet. Bei chlorhaltigen Kohlen bildet sich ein chloridreiches Abwasser. Um die Salzfracht der Gewässer zu vermindern, wird das vorkonzentrierte chloridhaltige Abwasser eingedampft. Das anfallende Chlorid kann dann als Salz entsorgt werden.

Das die Gasreinigungsanlage 7 je nach angewandtem Verfahren mit etwa 20 bis 80° C verlassende Reingas wird im Rohgas-Reingas-Wärmetauscher 9 durch das Rohgas wieder aufgeheizt und über die Reingasleitung 30 der Brennkammer 17 der Gasturbine 14 zugeleitet. Diesem Reingas wird unmittelbar vor der Brennkammer der Gasturbine Stickstoff zugeleitet. Dieser wird nach dem Verlassen der Luftzerlegungsanlage 5 im Stickstoffverdichter 24 auf das Druckniveau in der Reingasleitung 30 unmittelbar vor der Brennkammer 17 der Gasturbine 14 verdichtet und dabei auf ca. 90 bis 200° C aufgeheizt. Anschliessend wird er im Stickstoff-Luft-Wärmetauscher 26 weiter auf das Temperaturniveau des aus dem Rohgas-Reingas-Wärmetauscher 9 anströmenden Reingases aufgeheizt. Das so gebildete heisse aber in seinem Heizwert herabgesetzte Brenngas strömt in die Brennkammer 17, wird dort verbrannt und der Gasturbine 14 zugeleitet. Das Abgas der Gasturbine gelangt über die Abgasleitung 31 in die Abhitzedampferzeugeranlage 32 und gibt dort in den Hochdruckdampferzeuger 34, der Speisewasserheizfläche 35 und dem Niederdruckdampferzeuger 36 seine Wärme an das Speisewasser bzw. den Dampf ab. Auf 100 bis 180° C abgekühlt, wird das Abgas in den Kamin 33 geleitet.

Es ist ein besonderer Vorzug dieses Kraftwerkes, dass die überschüssige Wärme der Verdichterluft nicht nur zur Aufheizung des der Brennkammer 17 zuströmenden Stickstoffs, sondern auch dazu verwendet wird, die für den Molsiebregenerationskreislauf 22 erforderliche Wärme und die Prozesswärme weiterer Verbraucher innerhalb der Kraftwerksanlage bereitzustellen. Die der Luftzerlegungsanlage zuströmende heisse, verdichtete Luft kann nach dem Passieren des Stickstoff-Luft-Wärmetauschers, auch bei einem nunmehr niederen Temperaturniveau noch zur internen Prozesswärmeerzeugung herangezogen werden. So kann der dem Stickstoff-Luft-Wärmetauscher 26 nachgeschaltete Wärmetauscher 27 zur Eindampfung von vorkonzentrierten chlorhaltigen Abwässern der Gasreinigungsanlage dienen. Von den technisch bekannten Verfahren zur Abwassereindampfung erscheint hierfür vor allem die mehrstufige Eindampfung unter Vakuum geeignet, weil durch die so erreichbare Absenkung der Verdampfungstemperatur die Ausnutzung eines grossen Anteils der fühlbaren Wärme der Luft zur Eindampfung erreicht wird. Die Festlegung der Stufenzahl hängt von technisch-wirtschaftlichen Gesichtspunkten ab. Aus Gründen des Energieverbrauchs ist in der Regel mehr als eine Stufe notwendig. Wenn der Energiebedarf für die Eindampfung nicht vollständig aus der im Wärmetauscher aufgenommenen Wärme gedeckt werden kann, so kann noch zusätzlich in der Kraftwerksanlage erzeugter Heizdampf der Eindampfanlage zugeführt werden.

Dazu kann vor allem ein Teil des in der Schwefelgewinnungsanlage erzeugten Dampfes oder aus dem Dampfturbinenkraftwerksteil 3 entnommener Niederdruckdampf verwendet werden. Die der Schwefelwasserstoffabsorptionsanlage 12 durch den Wärmetauscher 51 zugeführte Heizwärme – die insbesondere den Wärmebedarf zur Regenerierung des beladenen Waschmittels decken soll – kann aus einem Teil der in den Wärmetauschern 27 oder 28 abgeführten Wärme gedeckt werden. Die Einkopplung der Wärme aus dem Wärmetauscher 28 ist wegen des niedrigen Temperaturniveaus vor allem für die Waschmittelregenerierung unter Vakuum geeignet.

*Bezugszeichenliste*

| | |
|---|---|
| Gas- und Dampfturbinenkraftwerk | 1 |
| Gasturbinen-Kraftwerksteil | 2 |
| Dampfturbinen-Kraftwerksteil | 3 |
| Kohlevergaser | 4 |
| Luftzerlegungsanlage | 5 |
| Wärmetauscheranlage | 6 |
| Gasreinigungsanlage | 7 |
| Hochdruckdampferzeuger | 8 |
| Rohgas-Reingas-Wärmetauscher | 9 |
| Niederdruckdampferzeuger | 10 |
| Rohgaswäscher | 11 |
| Schwefelwasserstoffabsorptionsanlage | 12 |
| Schwefelgewinnungsanlage | 13 |
| Gasturbine | 14 |
| Luftverdichter | 15 |
| Generator | 16 |
| Brennkammer | 17 |
| Luftleitung | 18 |
| Luftverdichter | 19 |
| Zweig | 20, 21 |
| Molsiebregenerationskreislauf | 22 |
| Wärmetauscher | 23 |
| Stickstoffverdichter | 24 |
| Stickstoffleitung | 25 |
| Stickstoff-Luft-Wärmetauscher | 26 |
| weiterer Wärmetauscher | 27 |
| Wärmetauscher | 28 |
| Endkühler | 29 |
| Reingasleitung | 30 |
| Abgasleitung | 31 |
| Abhitzedampferzeugeranlage | 32 |
| Kamin | 33 |
| Hochdruckdampferzeuger | 34 |
| Speisewasserheizfläche | 35 |
| Niederdruckdampferzeuger | 36 |
| Dampfturbine | 37 |
| Generator | 38 |
| Kondensator | 39 |
| Kondensatpumpe | 40 |
| Speisewasserbehälter | 41 |
| Speisewasserpumpe | 42, 43, 44 |
| Eintrittsstutzen | 45, 46 |
| Sauerstoffleitung | 47 |
| Sauerstoffverdichter | 48 |
| Kohleeintragsleitung | 49 |
| Ascheaustragsleitung | 50 |
| Reboiler der Regeneriersäule | 51 |
| Dampferzeuger der Schwefelgewinnungsanlage | 52 |
| Verdampfer | 53 |
| Abwasserbehandlungsanlage | 54 |

## Patentansprüche

1. Kombiniertes Gas- und Dampfturbinenkraftwerk mit einem dem Gasturbinenteil (2) vorgeschalteten Kohlevergaser (4), mit einer dem Kohlevergaser nachgeschalteten Wärmetauscheranlage (6) mit einem Rohgas-Reingas-Wärmetauscher (9), mit einer der Wärmetauscheranlage nachgeschalteten Gasreinigungsanlage (7), einer zur Brennkammer der Gasturbine führenden Reingasleitung (30), mit einer dem Kohlevergaser vorgeschalteten Luftzerlegungsanlage (5) mit einer den Kohlevergaser speisenden Sauerstoffleitung (47) und einer zur Brennkammer der Gasturbine führenden Stickstoffleitung (25), einem in die Stickstoffleitung eingeschalteten Stickstoffverdichter (24) und mindestens einem der Luftzerlegungsanlage und der Brennkammer der Gasturbine vorgeschalteten Luftverdichter (19), dadurch gekennzeichnet, dass die den Luftverdichter (15, 19) mit dem Eingang der Luftzerlegungsanlage (5) verbindende Luftleitung (18) in zwei parallele Zweige (20, 21) aufgespalten ist, in deren einen Zweig (20) ein in den Molsiebregenerationskreislauf (22) der Luftzerlegungsanlage geschalteter Wärmetauscher (23) und in deren anderen Zweig (21) ein an die zur Brennkammer (17) der Gasturbine (14) führende Stickstoffleitung (25) angeschlossener Stickstoff-Luft-Wärmetauscher (26) eingeschaltet ist.

2. Kombiniertes Gas- und Dampfturbinenkraftwerk nach Anspruch 1, dadurch gekennzeichnet, dass die Stickstoffleitung (25) hinter dem Stickstoff-Luft-Wärmetauscher (26) in die Reingasleitung (30) hinter dem Rohgas-Reingas-Wärmetauscher (9) mündet.

3. Kombiniertes Gas- und Dampfturbinenkraftwerk nach Anspruch 1, dadurch gekennzeichnet, dass in den den Stickstoff-Luftwärmetauscher (26) enthaltenden Zweig (21) der Luftleitung (18) mindestens ein weiterer Wärmetauscher (27) zur Erzeugung von Prozesswärme eingeschaltet ist.

4. Kombiniertes Gas- und Dampfturbinenkraftwerk nach Anspruch 1, dadurch gekennzeichnet, dass in den den Stickstoff-Luftwärmetauscher (26) enthaltenden Zweig (21) der Luftleitung (18) ein weiterer Wärmetauscher (28) zur Fernwärmeauskopplung eingeschaltet ist.

5. Kombiniertes Gas- und Dampfturbinenkraftwerk nach Anspruch 1, dadurch gekennzeichnet, dass ein Luftendkühler (29) in den den Stickstoff-Luftwärmetauscher (26) enthaltenden Zweig (21) der Luftleitung (18) der Luftzerlegungsanlage (5) unmittelbar vorgeschaltet ist.

6. Kombiniertes Gas- und Dampfturbinenkraftwerk nach Anspruch 3, dadurch gekennzeichnet, dass die im Wärmetauscher (27) freiwerdende Wärme einem Verdampfer (53) der Anlage zur Eindampfung des chloridhaltigen Abwassers der Abwasserbehandlungsanlage (54) zugeführt wird.

7. Kombiniertes Gas- und Dampfturbinenkraftwerk nach Anspruch 6, dadurch gekennzeichnet, dass dem Verdampfer (53) zusätzliche Wärme in Form von Niederdruckdampf aus der Niederdruckdampfturbine zuführbar ist.

8. Kombiniertes Gas- und Dampfturbinenkraftwerk nach Anspruch 6,

dadurch gekennzeichnet, dass dem Verdampfer zusätzliche Wärme in Form von Niederdruckdampf aus der Schwefelgewinnungsanlage (13) zuführbar ist.

9. Kombiniertes Gas- und Dampfturbinenkraftwerk nach Anspruch 6, dadurch gekennzeichnet, dass die Eindampfung des chloridhaltigen Abwassers unter Vakuum erfolgt.

10. Kombiniertes Gas- und Dampfturbinenkraftwerk nach Anspruch 9, dadurch gekennzeichnet, dass die Eindampfung in einer mehrstufigen Verdampferanlage (54) erfolgt, wobei die vom Wärmetauscher (27) zugeführte Wärme der ersten Verdampferstufe zugeführt wird.

11. Kombiniertes Gas- und Dampfturbinenkraftwerk nach Anspruch 3, dadurch gekennzeichnet, dass zumindest ein Teil der in den Wärmetauschern (27, 28) freiwerdenden Wärme dem Reboiler (51) der Regeneriersäule der Entschwefelungsanlage zuführbar ist.

12. Kombiniertes Gas- und Dampfturbinenkraftwerk nach Anspruch 11, dadurch gekennzeichnet, dass die Regenerierung des Waschmittels der Schwefelwasserstoffabsorptionsanlage (12) unter Vakuum erfolgt.

## Claims

1. Combined gas and steam turbine power plant with a coal gasifier (4) connected upstream of the gas turbine section (2), with a heat exchanger unit (6) connected on the outlet side of the coal gasifier and having a crude gas-pure gas heat exchanger (9), with a gas purification plant (7) connected on the outlet side of the heat exchanger unit, a pure gas line (30) leading to the combustion chamber of the gas turbine, with an air separation plant (5) connected upstream of the coal gasifier and having an oxygen line (47) supplying the coal gasifier and a nitrogen line (25) leading to the combustion chamber of the gas turbine, a nitrogen condenser (24) connected into the nitrogen line and at least one air condenser (19) connected upsteam of the air separation plant and the combustion chamber of the gas turbine, characterised in that the air line (18) connecting the air condenser (15, 19) to the input of the air separation plant (5) is divided into two parallel branches (20, 21), into one branch (20) of which there is connected a heat exchanger (23) connected into the molecular filter regeneration circuit (22) of the air separation plant and into the other branch (21) of which there is connected a nitrogen-air heat exchanger (26) connected to the nitrogen line (25) leading to the combustion chamber (17) of the gas turbine (14).

2. Combined gas and steam turbine power plant according to claim 1, characterised in that the nitrogen line (25) downstream of the nitrogen-air heat exchanger (26) opens into the pure gas line (30) downstream of the crude gas-pure gas heat exchanger (9).

3. Combined gas and steam turbine power plant according to claim 1, characterised in that there is connected into the branch (21) of the air line (18) containing the nitrogen-air heat exchanger (26) at least one further heat exchanger (27) to generate process heat.

4. Combined gas and steam turbine power plant according to claim 1, characterised in that connected into the branch (21) of the air line (18) containing the nitrogen-air heat exchanger (26) is a further heat exchanger (28) to take out remote heat.

5. Combined gas and steam turbine power plant according to claim 1, characterised in that an air aftercooler (29) is connected into the branch (21) of the air line (18) containing the nitrogen-air heat exchanger (26) immediately upstream of the air separation plant (5).

6. Combined gas and steam turbine power plant according to claim 3, characterised in that the heat released in the heat exchanger (27) is supplied to an evaporator (53) of the unit for evaporating the chloride-containing waste water of the waste water treatment plant (54).

7. Combined gas and steam turbine power plant according to claim 6, characterised in that additional heat in the form of low pressure steam may be supplied to the evaporator (53) from the low pressure steam turbine.

8. Combined gas and steam turbine power plant according to claim 6, characterised in that additional heat in the form of low pressure steam may be supplied to the evaporator from the sulphur extraction plant (13).

9. Combined gas and steam turbine power plant according to claim 6, characterised in that the evaporation of the chloride-containing waste water takes place under vacuum.

10. Combined gas and steam turbine power plant according to claim 9, characterised in that the evaporation takes place in a multiple stage evaporating plant (54), the heat supplied by the heat exchanger (27) being supplied to the first evaporator stage.

11. Combined gas and steam turbine power plant according to claim 3, characterised in that at least a part of the heat released in the heat exchangers (27, 28) may be supplied to the reboiler (51) of the regenerating column of the desulphurizing plant.

12. Combined gas and steam turbine power plant according to claim 11, characterised in that the regeneration of the washing agent of the hydrogen sulphide absorption plant (12) takes place under vacuum.

**Revendications**

1. Centrale électrique combinée à turbine à gaz et à turbine à vapeur, comprenant un appareil de gazéification de charbon (4) prévu en amont de la partie turbine à gaz (2), une installation d'échange thermique (6), prévue en aval de l'appareil de gazéification de charbon et comportant un échangeur de chaleur gaz brut-gaz épuré (9), une installation d'épuration de gaz (7) prévue en aval de l'installation d'échange thermique, une conduite de gaz épuré (30) menant à la chambre de combustion de la turbine à gaz, un décompositeur d'air (5) prévu en amont de l'appareil de gazéification de charbon, une conduite d'oxygène (47) alimentant l'appareil de gazéification de charbon et une conduite d'azote (25) menant à la chambre de combustion de la turbine à gaz, un compresseur d'azote (24) monté dans la conduite d'azote et au moins un compresseur d'air (19) prévu en amont du décompositeur d'air et de la chambre de combustion de la turbine à gaz, caractérisée en ce que la conduite d'air (18) reliant le compresseur d'air (15, 19) à l'entrée du décompositeur d'air (5) est divisée en deux branches parallèles (20, 21), dans l'une (20) desquelles est incorporé un échangeur de chaleur (23) monté dans le circuit de régénération (22) de tamis moléculaires du décompositeur d'air, et dans l'autre branche (21) desquelles est incorporé un échangeur de chaleur azote-air (26) raccordé à la conduite d'azote (25) menant à la chambre de combustion (17) de la turbine à gaz (14).

2. Centrale selon la revendication 1, caractérisée en ce que la conduite d'azote (25) en aval de l'échangeur de chaleur azote-air (26) débouche dans la conduite de gaz épuré (30) en aval de l'échangeur de chaleur gaz brut-gaz épuré (9).

3. Centrale selon la revendication 1, caractérisée en ce qu'au moins un échangeur de chaleur supplémentaire (27) pour la production de chaleur utilisée dans le processus est incorporé dans la branche (21) de la conduite d'air (18) contenant l'échangeur de chaleur azote-air (26).

4. Centrale selon la revendication 1, caractérisée en ce qu'un échangeur de chaleur supplémentaire (28) pour la dérivation de chaleur utilisée à distance est incorporé dans la branche (21) de la conduite d'air (18) contenant l'échangeur de chaleur azote-air (26).

5. Centrale selon la revendication 1, caractérisée en ce que la branche (21) de la conduite d'air (18) contenant l'échangeur de chaleur azote-air (26) comporte un refroidisseur d'air terminal (29) immédiatement en amont du décompositeur d'air (5).

6. Centrale selon la revendication 3, caractérisée en ce que la chaleur dégagée dans l'échangeur de chaleur (27) est amenée à un évaporateur (53) de l'installation pour la concentration par évaporation de l'eau usée chlorurée de l'installation (54) de traitement des eaux usées.

7. Centrale selon la revendication 6, caractérisée en ce que l'évaporateur (53) peut être alimenté avec de la chaleur supplémentaire sous forme de vapeur basse pression provenant de la turbine à vapeur basse pression.

8. Centrale selon la revendication 6, caractérisée en ce que l'évaporateur peut être alimenté avec de la chaleur supplémentaire sous forme de vapeur basse pression provenant de l'installation (13) d'extraction de soufre.

9. Centrale selon la revendication 6, caractérisée en ce que la concentration par évaporation de l'eau usée chlorurée s'opère sous vide.

10. Centrale selon la revendication 9, caractérisée en ce que la concentration par évaporation s'effectue dans une installation d'évaporation (54) à plusieurs étages, avec alimentation du premier étage d'évaporation avec de la chaleur amenée depuis l'échangeur de chaleur (27).

11. Centrale selon la revendication 3, caractérisée en ce qu'une partie au moins de la chaleur dégagée dans les échangeurs de chaleur (27, 28) peut être amenée au rebouilleur (51) de la colonne de régénération de l'installation de désulfuration.

12. Centrale selon la revendication 11, caractérisée en ce que la régénération de l'agent de lavage de l'installation (12) d'absorption de l'acide sulfhydrique s'opère sous vide.